# EUROPÄISCHE PATENTSCHRIFT

(11) **EP 0 853 569 B1**
(45) Veröffentlichungstag und Bekanntmachung des Hinweises auf die Patenterteilung: **28.04.1999**
(21) Anmeldenummer: 96934407.6
(22) Anmeldetag: 03.09.1996
(51) Int. Cl.: B60T 8/36

(54) **HYDRAULISCHES AGGREGAT EINER SCHLUPFGEREGELTEN KRAFTFAHRZEUG-BREMSANLAGE**
HYDRAULIC UNIT OF A SLIP-CONTROLLED MOTOR VEHICLE BRAKE SYSTEM
UNITE HYDRAULIQUE D'UN SYSTEME DE FREINAGE ANTIPATINAGE D'UN VEHICULE A MOTEUR

(30) Priorität: 02.10.1995 DE 19536847
(43) Veröffentlichungstag der Anmeldung: 22.07.1998
(73) Patentinhaber: ROBERT BOSCH GMBH, 70442 Stuttgart (DE)
(72) Erfinder: SIEGEL, Heinz, D-70435 Stuttgart (DE); PABST, Carsten, D-70499 Stuttgart (DE); GUGGEMOS, Johann, D-87544 Blaichach (DE); SCHNURR, Norbert, D-78239 Rielasingen-Worblingen (DE); EBERSPAECHER, Peter, D-73765 Neuhausen (DE); BENZINGER, Roland, D-70499 Stuttgart (DE); HELLEBRANDT, Michael, D-87545 Burgberg (DE); SULLIVAN, Shawn, Summerville, SC 29483 (US); WEH, Andreas, D-87471 Durach (DE)
(86) Internationale Anmeldenummer: DE9601632
(87) Internationale Veröffentlichungsnummer: WO9712790

(56) Entgegenhaltungen:
- EP-A- 0 478 933
- WO-A-90/11212
- WO-A-94/08830
- DE-A- 2 643 860
- DE-A- 4 119 662

## Beschreibung

### Stand der Technik

Die Erfindung geht aus von einem hydraulischen Aggregat nach der Gattung des Patentanspruchs 1.

Es ist schon ein solches Aggregat aus der gattungsbildenden Wo 94/08830 bekannt, bei dem die Dämpferkammer eine Länge von etwa dem Zweifachen ihres Durchmessers aufweist und zum Teil in eine Ausnehmung eines Verschlußelements fortgesetzt ist. Eine derart gestaltete Dämpferkammer ist durch spanende Bearbeitung im Gehäuseblock einfach herstellbar. Da für eine ausreichende vergleichmäßigende Wirkung der Dämpferkammer auf den pulsierend geförderten Volumenstrom der Pumpe ein entsprechend großes Kammervolumen erforderlich ist, muß der Durchmesser der Bohrung bei dem gegebenen Verhältnis zur Länge entsprechend groß sein. Dies verlangt jedoch einen dementsprechend großen Einbauraum im Gehäuseblock des hydraulischen Aggregats, was dem Wunsch nach Verkleinerung des Bauvolumens und Gewichtseinsparung entgegensteht. Die aus den Abmessungen der Dämpferkammer resultierende hohe Belastung des Verschlußelements durch den Pumpendruck erfordert dessen Schraubbefestigung mit entsprechender Gewindelänge. Darüber hinaus ist zusätzlich ein zylindrischer Abschnitt der Verschlußschraube mit eingelegtem Dichtungsring erforderlich, um die Dämpferkammer nach außen abzudichten. Dies verteuert die Herstellung des Aggregats und kann Montagefehler hervorrufen.

### Vorteile der Erfindung

Das erfindungsgemäße hydraulische Aggregat mit den Merkmalen des Patentanspruchs 1 hat demgegenüber den Vorteil, daß die Dämpferkammer aufgrund des Durchmesser-Längen-Verhältnisses in Richtung quer zu ihrer Längsachse raumsparend anzuordnen ist. Bei der im Vergleich zur bekannten Lösung bei gleichen Volumina im Durchmesser kleineren erfindungsgemäßen Dämpferkammer ist trotz gleichen Druckverhältnissen die Belastung des Verschlußelementes geringer, so daß zu einer rationellen Befestigungsart gegriffen werden kann und eine besondere Abdichtung entbehrlich ist.

Weitere vorteilhafte Ausgestaltungen des Verschlußelementes sind in den Ansprüchen 2 bis 6 gekennzeichnet.

Die im Anspruch 2 angegebene Ausgestaltung zeichnet sich durch eine sehr einfache Montage aus.

Mit der Ausgestaltung nach Anspruch 3 ist ein als Drehteil einfach herstellbares Verschlußelement offenbart.

Die Verschlußelemente nach den Ansprüchen 4 und 5 können als Tiefziehteile aus Blech geformt und aufgrund der Bodenform ausreichend hoch belastbar sein, wobei das Verschlußelement nach Anspruch 5 noch zum wirksamen Volumen der Dämpferkammer beiträgt.

Dies ist bei der Ausführungsform nach Anspruch 6 ebenso der Fall, wobei das Verschlußelement als hochbelastbares Fließpreßteil ausgebildet sein kann.

### Zeichnungen

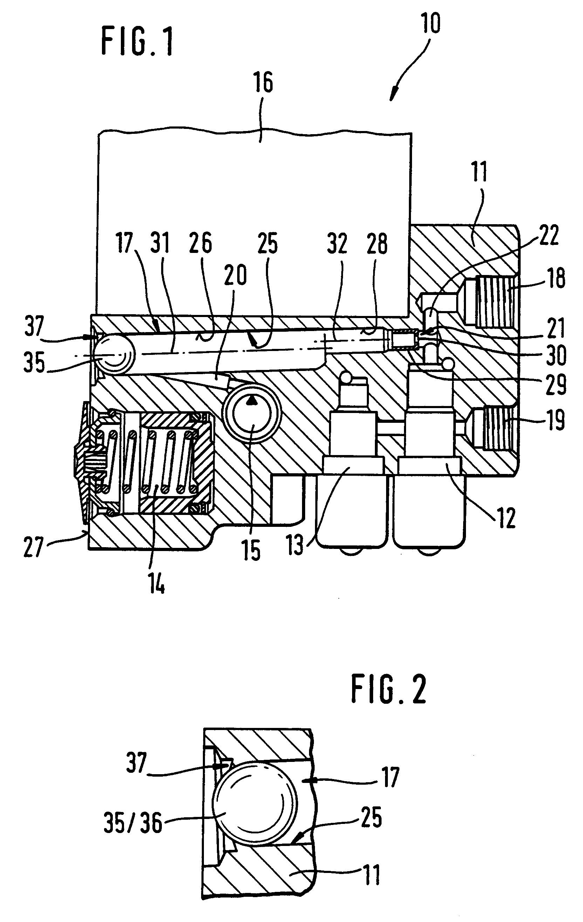

Ein Ausführungsbeispiel der Erfindung ist in den Zeichnungen vereinfacht dargestellt und in der nachfolgenden Beschreibung näher erläutert. Es zeigen Figur 1 ein hydraulisches Aggregat im Schnitt einer schlupfgeregelten Kraftfahrzeug-Bremsanlage mit einer durch ein Verschlußelement verschlossenen Dämpferkammer und Figuren 2 bis 6 Ausführungsformen für Verschlußelemente in gegenüber Figur 1 vergrößertem Maßstab.

### Beschreibung des Ausführungsbeispiels

Ein in Figur 1 im Schnitt dargestelltes hydraulisches Aggregat 10 einer schlupfgeregelten Kraftfahrzeug-Bremsanlage hat einen Gehäuseblock 11, in dem Elemente der Bremsanlage aufgenommen sind. Von diesen Elementen sind in der Schnittebene sichtbar:
Zwei Ventile 12 und 13, eine Speicherkammer 14 für Druckmittel, eine mit einem Symbol angegebene Hochdruckpumpe 15, welche durch einen elektrischen Antriebsmotor 16 antreibbar ist, und eine Dämpferkammer 17. Ferner sind zwei Anschlußbohrungen 18 und 19 für den Anschluß nicht dargestellter Leitungen sichtbar, welche die obere Aßschlußbohrung 18 mit einem Hauptbremszylinder und die untere Anschlußbohrung 19 mit einem Radbremszylinder der Bremsanlage verbinden.

Die Dämpferkammer 17 dient der Glättung des Druckmittel-Volumenstroms, den die pulsierend fördernde Hochdruckpumpe 15 bei einer Blockierschutzregelung durch eine Leitung 20 in die Dämpferkammer 17 fördert, aus der das Druckmittel nach Überwindung einer Drosselstelle 21 durch eine Ausgangsleitung 22 und die Anschlußbohrung 18 zum Hauptbremszylinder gelangt. Ein Schaltschema und eine Funktionsbeschreibung einer schlupfgeregelten Kraftfahrzeug-Bremsanlage, in der die Wirkungsweise der Dämpferkammer 17 Anwendung findet, ist beispielsweise in DE 41 19 662 A1 dargestellt und beschrieben.

Die Dämpferkammer 17 ist von einer abgestuften Bohrung 25 des Gehäuseblocks 11 gebildet. Die Bohrung 25 geht mit einem durchmessergrößeren Abschnitt 26 von einer Seitenfläche 27 des Gehäuseblocks 11 aus. An den durchmessergrößeren Abschnitt 26 schließt sich ein durchmesserkleinerer Abschnitt 28 an. Dieser ist endseitig im Durchmesser abgesetzt und weist dort eine eingepreßte Hülse 29 mit einer bodenseitigen Bohrung 30 auf, welche die erwähnte Drosselstelle 21 bildet. In der dargestellten Gebrauchslage des hydraulischen Aggregats 10 weicht der Verlauf der abgestuften Bohrung 25 geringfügig von der Waagerechten ab, das heißt die Bohrungsachsen 31 und 32 der beiden Bohrungsabschnitte steigen, von der Seitenfläche 27 des Gehäuseblocks 11 ausgehend, nach rechts oben an. Außerdem erkennt man aus dem Verlauf der beiden Bohrungsachsen 31 und 32, daß die Bohrungsabschnitte 26 und 28 nicht fluchten. Der durchmesserkleinere Abschnitt 28 ist nämlich gegenüber dem durchmessergrößeren Abschnitt 26 außermittig nach oben versetzt, so daß die Mäntel beider Bohrungsabschnitte an wenigstens einem Punkt wenigstens annähernd fluchtend ineinander übergehen.

Die Dämpferkammer 17 ist im Bereich ihrer Mündung in die Seitenfläche 27 mit einem Verschlußelement 35 nach außen dicht verschlossen. Als erste Ausführungsform des Verschlußelementes ist eine Kugel 36 vorgesehen (Fig. 2). Diese ist mit radialer Pressung im Bohrungsabschnitt 26 aufgenommen und mündungsseitig durch eine Prägeverbindung 37 gehalten. Die Prägeverbindung 37 ist durch Verdrängen von Gehäusewerkstoff erzielt, welche die Kugel 36 in einem geschlossenen Kreis formschlüssig umgreift. Das derart befestigte Verschlußelement 35 dichtet nicht nur die Dämpferkammer 17 zuverlässig gegen den Austritt von Druckmittel nach außen ab, sie ist auch in der Lage, die Kugel 36 gegen vom Pumpendruck herrührende Kräfte sicher in ihrem Preßsitz zu halten.

Der wesentlich das Volumen der Dämpferkammer 17 zur Aufnahme von Druckmittel bestimmende durchmessergrößere Bohrungsabschnitt 26 hat ein Durchmesser-Längen-Verhältnis von etwa 1 : 5. Der durchmesserkleinere Bohrungsabschnitt 28 trägt nur zu etwa einem weiteren Fünftel zum erwähnten Volumen des Bohrungsabschnitts 26 bei. Aufgrund der Abmessungen insbesondere des Bohrungsabschnittes 26 hat die Dämpferkammer 17 eine relativ schlanke Form. Sie benötigt daher in vertikaler Richtung relativ wenig Einbauraum im Gehäuseblock 11. Wegen dieser Form der Dämpferkammer 17 kann der Gehäuseblock 11 des hydraulischen Aggregats 10 in vertikaler Richtung relativ schmal ausgebildet sein. Dieser Vorteil der Raumersparnis ist gegenüber dem eingangs erwähnten Stand der Technik erzielbar, wenn das Durchmesser-Längen-Verhältnis der Dämpferkammerbohrung 26 zwischen 1 : 3 und 1 : 12 liegt.

Die von der Hochdurckpumpe 15 herführende Leitung 20 mündet unten in den durchmessergrößeren Abschnitt 26 der Dämpferkammer-Bohrung 25 ein. Dabei verläuft die Leitung 20 unter einem spitzen Winkel zur Bohrungsachse 21 in Richtung auf das Verschlußelement 35. Von der Hochdruckpumpe 15 gefördertes Druckmittel dringt also unten in die Dämpferkammer 17 ein, kehrt seine Fließrichtung weitgehend um und strömt vom durchmessergrößeren Abschnitt 26 in den höher gelegenen durchmesserkleineren Abschnitt 28, den das Druckmittel nach Überwindung der Drosselstelle 21 durch die Ausgangsleitung 22 verläßt. Diese Strömungsführung begünstigt das Entlüften der Dämpferkammer 17 bei der Erstbefüllung des hydraulischen Aggregats 10 mit Druckmittel. Dieses füllt die Dämpferkammer 17 von unten her auf und verdrängt das in der Dämpferkammer vorhandene Gas zur Ausgangsleitung 22. Im Bereich des Verschlußelementes 35 haftende Gasblasen werden vom Druckmittelstrom der Hochdruckpumpe 15 erfaßt und durch die Dämpferkammer 17 zur Ausgangsleitung 22 gespült. Nimmt, abweichend von der dargestellten Gebrauchslage, daß hydraulische Aggregat 10 eine um etwa 90° entgegen dem Uhrzeigersinn gedrehte Gebrauchslage ein, so bleibt die gute Entlüftbarkeit der Dämpferkammer 17 erhalten oder wird sogar verbessert.

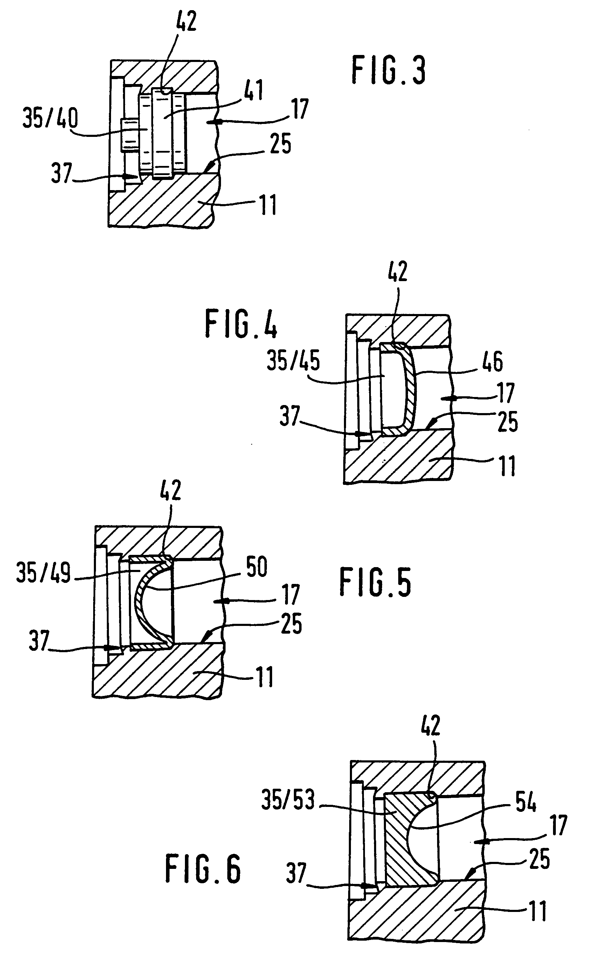

Anstelle der Kugel 36 können auch andere Verschlußelemente 35 der Dämpferkammer 17 Anwendung finden:
So zeigt Figur 3 als Verschlußelement 35 einen zylindrischen Stopfen 40, der umfangsseitig einen Bund 41 aufweist, mit dem der Stopfen an einer Anschlagfläche 42 der Dämpferkammer-Bohrung 25 abgestützt ist. Der mit Preßsitz in der Bohrung 25 aufgenommene Bund 41 ist mündungsseitig durch die erwähnte Prägeverbindung 37 umlaufend übergriffen.

Bei der Ausführungsform des Verschlußelementes 35 nach Figur 4 findet eine Hülse 45 Anwendung welche aus Blech tiefgezogen ist und einen dämpferkammerseitig konvex ausgebildeten Boden 46 hat. Die Hülse 45 ist umfangseitig mit Preßsitz in der Bohrung 25 aufgenommen und mündungsseitig von der Prägeverbindung 37 übergriffen. Trotz geringer Blechdicke vermag der Boden 46 aufgrund seiner Formgebung den dämpferkammerseitig auf ihn wirkenden Kräften zu widerstehen.

Die Ausführungsform eines Verschlußelements 35 nach Figur 5 zeigt ebenfalls eine als Tiefziehteil aus Blech gefertigte Hülse 49 mit einem dämpferkammerseitig konkav, das heißt als halbe Hohlkugel ausgebildeten Boden 50. Das innerhalb des Bodens 50 liegende Volumen trägt zum Volumen der Dämpferkammer 17 bei. Die Hülse 49 ist in gleicher Weise wie bei der Ausführungsform nach Figur 4 in der Dämpferkammer-Bohrung 25 befestigt.

Figur 6 zeigt eine Ausführungsform für das Verschlußelement 35 in der Form eines als Fließpreßteil ausgebildeten zylindrischen Stopfens 53. Er hat entsprechend der Ausführungsform nach Figur 5 eine dämpferkammerseitig konkav ausgebildete Ausnehmung 54. Diese trägt ebenfalls zum Dämpferkammer-Volumen bei. Der zylindrische Stopfen 53 sitzt mit Preßsitz in der Dämpferkammer-Bohrung 25 und ist mündungsseitig mittels der Prägeverbindung 37 gehalten.

## Patentansprüche

1. Hydraulisches Aggregat (10) einer schlupfgeregelten Kraftfahrzeug-Bremsanlage, mit den folgenden Merkmalen:
- es ist eine Dämpferkammer (17) vorgesehen, die eingangsseitig mit Mitteln, welche Pulsationen verursachen, insbesondere einer Hochdruckpumpe (15), und ausgangsseitig mit einer Ausgangsleitung (22) in Verbindung steht,
- die Dämpferkammer (17) ist in einem Gehäuseblock (11) des hydraulischen Aggregats (10) angeordnet, in dem weitere Elemente (12, 13, 14) der Bremsanlage aufgenommen sind,
- die Dämpferkammer (17) ist von einer Bohrung (26) gebildet, welche von einer Außenfläche (27) des Gehäuseblocks (11) ausgeht und durch ein Verschlußelement (35) nach außen verschlossen ist,
gekennzeichnet durch die weiteren Merkmale:
- das Durchmesser-Längen-Verhältnis der Dämpferkammer-Bohrung (26) liegt zwischen 1 : 3 und 1 : 12,
- das Verschlußelement (35) der Dämpferkammer (17) ist mit radialer Pressung in der Bohrung (25) aufgenommen und mündungsseitig durch eine Prägeverbindung (37) gehalten.

2. Hydraulisches Aggregat nach Anspruch 1, dadurch gekennzeichnet, daß das Verschlußelement (35) eine Kugel (36) ist.

3. Hydraulisches Aggregat nach Anspruch 1, dadurch gekennzeichnet, daß das Verschlußelement ein zylindrischer Stopfen (40) mit einem umfangseitigen Bund (41) ist.

4. Hydraulisches Aggregat nach Anspruch 1, dadurch gekennzeichnet, daß das Verschlußelement (35) eine Hülse (45) mit einem dämpferkammerseitig konvex ausgebildeten Boden (46) ist.

5. Hydraulisches Aggregat nach Anspruch 1, dadurch gekennzeichnet, daß das Verschlußelement (35) eine Hülse (49) mit einem dämpferkammerseitig konkav ausgebildeten Boden (50) ist.

6. Hydraulisches Aggregat nach Anspruch 1, dadurch gekennzeichnet, daß das Verschlußelement (35) ein zylindrischer Stopfen (53) mit einer dämpferkammerseitig konkav ausgebildeten Ausnehmung (54) ist.

## Claims

1. Hydraulic unit (10) of a slip-controlled motor-vehicle brake system, having the following features:
- a damper chamber (17) is provided, which is connected on the inlet side to means which cause pulsations, in particular a high-pressure pump (15), and on the outlet side to an outlet line (22),
- the damper chamber (17) is arranged in a housing block (11) of the hydraulic unit (10), in which housing block (11) further elements (12, 13, 14) of the brake system are accommodated,
- the damper chamber (17) is formed by a bore (26), which starts from an outer surface (27) of the housing block (11) and is closed to the outside by a closure element (35),
characterized by the following features:
- the diameter-to-length ratio of the damper-chamber bore (26) is between 1 : 3 and 1 : 12,
- the closure element (35) of the damper chamber (17) is accommodated with radial pressure in the bore (25) and is held on the orifice side by an embossed connection (37).

2. Hydraulic unit according to Claim 1, characterized in that the closure element (35) is a ball (36).

3. Hydraulic unit according to Claim 1, characterized in that the closure element is a cylindrical plug (40) having a circumferential collar (41).

4. Hydraulic unit according to Claim 1, characterized in that the closure element (35) is a sleeve (45) having a base (46) of convex design on the damper-chamber side.

5. Hydraulic unit according to Claim 1, characterized in that the closure element (35) is a sleeve (49) having a base (50) of concave design on the damper-chamber side.

6. Hydraulic unit according to Claim 1, characterized in that the closure element (35) is a cylindrical plug (53) having a recess (54) of concave design on the damper-chamber side.

## Revendications

1. Unité hydraulique (10) d'une installation de frein de véhicule à régulation antipatinage ayant :
- une chambre d'amortissement (17) reliée en entrée de moyens qui engendrent les pulsations notamment une pompe à haute pression (15) et en sortie cette unité est reliée à une conduite de sortie (22),
- la chambre d'amortissement (17) se trouvant dans un bloc (11) formant le boîtier de l'unité hydraulique (10), ce bloc logeant les autres éléments (12, 13, 14) de l'installation de frein,
- la chambre d'amortissement (17) étant formée par un perçage (26) partant d'une surface extérieure (27) du bloc de boîtier (11) et fermée vis-à-vis de l'extérieur par un élément d'obturation (35),
caractérisée en ce que
- le rapport diamètre/longueur du perçage (26) de la chambre d'amortissement est compris entre 1 : 3 et 1 : 12,
- l'élément d'obturation (35) de la chambre d'amortissement (17) est tenu par un pressage radial dans le perçage (25) et cet élément est tenu du côté de l'orifice par un sertissage (37).

2. Unité hydraulique selon la revendication 1, caractérisée en ce que l'élément d'obturation (35) est une bille (36).

3. Unité hydraulique selon la revendication 1, caractérisée en ce que l'élément d'obturation est un bouchon cylindrique (40) ayant une collerette (41) périphérique.

4. Unité hydraulique selon la revendication 1, caractérisée en ce que l'élément d'obturation (35) est un manchon (45) avec un fond (46) convexe tourné vers la chambre d'amortissement.

5. Unité hydraulique selon la revendication 1, caractérisée en ce que l'élément d'obturation (35) est un manchon (49) avec un fond (50) concave tourné vers la chambre d'amortissement.

6. Unité hydraulique selon la revendication 1, caractérisée en ce que l'élément d'obturation (35) est un bouchon cylindrique (53) avec une cavité (54) de forme concave tournée vers la chambre d'amortissement.
